## Europäisches Patentamt
## European Patent Office
## Office européen des brevets

(11) Veröffentlichungsnummer: **0 029 524**
A1

(12) # EUROPÄISCHE PATENTANMELDUNG

(21) Anmeldenummer: **80106718.2**

(22) Anmeldetag: **31.10.80**

(51) Int. Cl.³: **B 23 K 9/06**

(30) Priorität: **05.11.79 DE 2944608**

(43) Veröffentlichungstag der Anmeldung:
**03.06.81 Patentblatt 81/22**

(84) Benannte Vertragsstaaten:
**AT BE FR GB IT LU NL SE**

(71) Anmelder: **SIEMENS AKTIENGESELLSCHAFT Berlin und München**
**Postfach 22 02 61**
**D-8000 München 22(DE)**

(72) Erfinder: **Sliva, Eduard**
**Chiemgaustrasse 54**
**D-8000 München 90(DE)**

(54) **Einrichtung zum Lichtbogenschweissen mit vorgegebener Stromcharakteristik.**

(57) Für das sichere Einleiten des Lichtbogens beim WIG-Schweißen wird eine relativ hohe Leerlaufspannung von etwa 100 V der Schweißstromquelle benötigt, da die Zündfreudigkeit proportional der Höhe der Leerlaufspannung ist. Da nach dem Zünden nur eine Lichtbogenspannung von 10 bis 16 V benötigt wird, muß die Differenz in einem Vorwiderstand (6) vernichtet werden. Für diese relativ hohe Verlustleistung muß das Netz und die Schweißstromquelle ausgelegt sein. Die Verlustleistung kann gemäß der Erfindung dadurch wesentlich erniedrigt werden, daß eine Schweißstromquelle (1, 2) mit einer Leerlaufspannung von maximal 35 V verwendet ist, der über eine Trenndiode (21) eine Hilfs-Schweißstromquelle (18, 19) mit einer Leerlaufspannung von 80 bis 120 V für die Dauer des Zündvorganges parallel schaltbar ist.

EP 0 029 524 A1

SIEMENS AKTIENGESELLSCHAFT           Unser Zeichen
Berlin und München                   VPA 79 P 7207

Einrichtung zum Lichtbogenschweißen mit vorgegebener
Stromcharakteristik

Die Erfindung bezieht sich auf eine Einrichtung zum Lichtbogenschweißen mit vorgegebener Stromcharakteristik, bestehend aus einer Schweißstromquelle mit einem Drehstromtransformator, einem nachgeschalteten Brückengleichrichter und einem Leistungstransformator als Stellglied
für die Regelung auf die vorgegebene Schweißstromstärke,
sowie einem zur Schweißstromquelle parallel geschalteten
Zündgerät zum berührungslosen Zünden eines elektrischen
Gleichstrom-Schweißlichtbogens.

Für das sichere Einleiten des Lichtbogens, insbesondere
beim WIG-Schweißen, wird eine relativ hohe Leerlaufspannung von etwa 60 bis 100 V zwischen der Elektrode
und dem Werkstück benötigt. Da die Zündfreudigkeit bekanntlich proportional der Höhe der Leerlaufspannung ist,
wählt man aus Sicherheitsgründen meist eine höhere Leerlaufspannung von z.B. 100 V. Nach dem Zünden des Lichtbogens wird zu dessen Aufrechterhaltung je nach der Strom-

Hs 1 Kow / 29.10.1979

stärke nur eine Spannung zwischen 10 bis 15 V benötigt. Die Differenz zwischen Leerlauf- und Schweißspannung muß an einem dem Transistor vorgeschalteten Widerstand zum Abfall gebracht werden. Der durch diesen Widerstand fließende Schweißstrom verursacht eine erhebliche Verlustleistung, die in Wärme umgesetzt wird. Diese Verlustleistung kann erfahrungsgemäß mehrere kW betragen, die nicht nur vom Versorgungsnetz bereitgestellt werden muß, sondern für die die Schweißstromquelle auch ausgelegt sein muß. Zum Abtransport dieser Verlustleistung sind kostenspielige Kühleinrichtungen erforderlich.

Durch die DE-OS 19 64 245 ist eine Einrichtung zum Lichtbogenschweißen mit Konstantstromcharakteristik bekannt geworden, bei der als Stellglied steuerbare Halbleiter verwendet sind, die nach dem Prinzip der Phasenanschnittssteuerung arbeiten. Bei einer vorgegebenen Leistung ist bei einer solchen Steuerung der Stromflußwinkel derart von der Spannung am Eingang des Stellgliedes abhängig, daß bei größerwerdender Spannung der Stromflußwinkel kleiner und damit die Stromflußlücken vergrößert werden. Um den Stromflußwinkel möglichst groß zu halten, wird bei der bekannten Einrichtung die Spannung am Eingang des Stellgliedes auf das Zwei- bis Dreifache der Lichtbogenspannung herabgesetzt. Da jedoch eine derartige niedrige Spannung für das Zünden des Lichtbogens nicht ausreichend ist, wird zusätzlich eine Zündstromquelle mit einer sehr hohen Spannung bei niedriger Leistung vorgesehen, die zur Leistungsstromquelle parallel geschaltet ist. Dadurch wird die Erstzündung und jede erforderliche Wiederzündung des Lichtbogens sicher gewährleistet. Aufgrund der niedrigen Eingangsspannung am Stellglied wird bei einem vorgegebenen Leistungswert ein großer Stromflußwinkel erzielt, wodurch ein Strom mit verhältnismäßig schmalen Lücken entsteht, der mit geringem Aufwand an Siebmitteln in einen lückenlosen Strom geformt werden kann. Ein weiterer Vor-

-3-　79 P 7 2 0 7

teil besteht darin, daß der Leistungsteil der Einrichtung kleiner und damit billiger ausgeführt werden kann. Bei einer ausschließlich für das Gleichstromschweißen vorgesehenen Einrichtung sind die Leistungsstromquelle und die Zündstromquelle mit Hilfe einer Diode entkoppelt, so daß auf diese Weise eine Beeinflussung des Stellgliedes durch die hohe Spannung der Zündstromquelle verhindert wird.

Der Erfindung liegt die Aufgabe zugrunde, eine Einrichtung der eingangs beschriebenen Art derart auszubilden, daß bei annähernd gleicher Schweißleistung die Verlustleistung erheblich geringer gehalten werden kann, als bei den bekannten Vorrichtungen, so daß man mit einer relativ einfachen Luftkühlung der Schweißstromquelle auskommt. Diese Aufgabe wird gemäß der Erfindung dadurch gelöst, daß eine Schweißstromquelle mit einer Leerlaufspannung von maximal 35 V verwendet ist, der über eine Trenndiode eine Hilfs-Schweißstromquelle mit einer Leerlaufspannung von 80 bis 100 V, vorzugsweise 100 V, für die Dauer des Zündvorganges parallel schaltbar ist.

Nach dem Zünden des Lichtbogens wird also die Hilfs-Schweißstromquelle unmittelbar abgeschaltet und die Schweißstromquelle mit der niedrigen Leerlaufspannung liefert dann die zur Aufrechterhaltung des Lichtbogens erforderliche Spannung. Da die Differenz zwischen der Leerlauf- und Schweißspannung wesentlich geringer ist als bei den bekannten Einrichtungen, ist dementsprechend auch die Verlustleistung erheblich geringer, so daß man mit einer relativ einfachen Luftkühlung der Elemente auskommt.

Die Hilfs-Schweißstromquelle kann im Bedarfsfalle auch zeit- und/oder stromabhängig geschaltet sein.

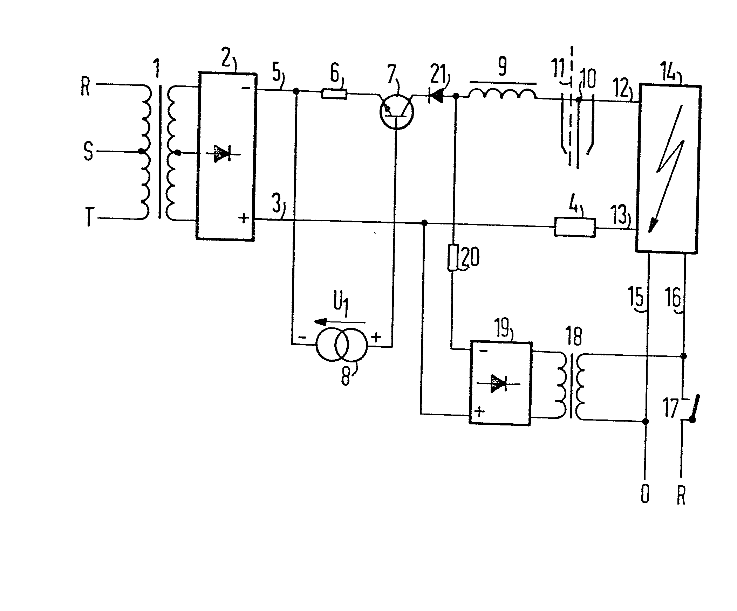

Anhand der Zeichnung, in der ein Ausführungsbeispiel dargestellt ist, wird die Erfindung näher erläutert.

Die Primärwicklung eines Transformators 1 ist an die Netzphasen R, S und T angeschlossen. Die Sekundärwicklung des Transformators 1 ist mit einem Brückengleichrichter 2 verbunden, dessen positive Ausgangsklemme über eine Leitung 3 mit einem Werkstück 4 verbunden ist, während die negative Klemme über eine Leitung 5 mit einem Widerstand 6 verbunden ist, welcher mit der Kollektor-Emitterstrecke eines als Stellglied dienenden Leistungstransistors 7 in Verbindung steht. Als Leistungstransistor wird beispielsweise ein solcher mit der Typenbezeichnung PT93053 verwendet. Die Basis des Leistungstransistors 7 steht über eine regelbare Hilfsstromquelle 8 mit der negativen Klemme des Brückengleichrichters 2 in Verbindung. Damit kann eine bestimmte Schweißstromcharakteristik vorgegeben werden. Der Kollektor des Leistungstransistors 7 steht über eine Drossel 9 mit einer Elektrode 10 eines WIG-Schweißgerätes in Verbindung. Mit einer gestrichelten Linie 11 ist die Schutz-Gaszuführung angedeutet, welches beispielsweise Argon sein kann. Über Leitungen 12 und 13 steht die Elektrode 10 bzw. das Werkstück 4 mit einem Zündgerät 14 in Verbindung, welches in an sich bekannter Weise hochfrequente Spannungsspitzen an die Leitungen 12 und 13 abgibt. Über Leitungen 15 und 16 steht das Zündgerät 14 mit den Netzphasen O und R in Verbindung. Mit Hilfe eines Schaltkontaktes 17 kann das Zündgerät 14 zur Einleitung eines Lichtbogens an Spannung gelegt werden. Die Drossel 9 hält die von dem Zündgerät 14 erzeugten Hochspannungsspitzen von den Halbleitern fern.

Gemäß der Erfindung ist der Drehstromtransformator 1 so ausgelegt, daß er eine Leerlaufspannung von ~ 22V~(35V=) liefert. Da diese Spannung jedoch nicht ausreichend ist zum Einleiten eines Lichtbogens, ist gemäß der Erfindung eine Hilfs-Schweißstromquelle vorgesehen, die aus einem Transformator 18 und einem Gleichrichter 19 besteht, der über einen Widerstand 20 parallel zur Schweißstromquelle geschaltet ist. Eine Trenndiode 21 dient zur Entkopplung der beiden Schweißstromkreise. Der Transformator 18 der Hilfs-Schweißstromquelle wird ebenfalls mit Hilfe des Schaltkontaktes 17 an Spannung gelegt; ist also für die Dauer des Zündvorganges eingeschaltet. Die Hilfs-Schweißstromquelle ist so ausgelegt, daß eine Spannung von ca. 100 V abgegeben wird. Der Widerstand 20 beschränkt die Stromstärke auf ca. 2 A.

Zum Einleiten des Lichtbogens wird der Schaltkontakt 17 geschlossen, wodurch das Zündgerät 14 die notwendigen Hochspannungsspitzen liefert. Gleichzeitig wird zwischen Werkstück 4 und Elektrode 10 mit Hilfe der Hilfs-Schweißstromquelle (18, 19) eine Spannung von ca. 100 V angelegt, die zum Zünden eines Lichtbogens ausreichend ist. In diesem Zeitpunkt ist die Anode der Trenndiode 21 negativer (-100 V) als die Kathode (-34 V). Die höhere Spannung kann also nicht den Leistungs-Transistor 7 belasten, weil in diesem Fall die Trenndiode 21 sperrt, hilft aber beim Einleiten des Lichtbogens. Sobald der Lichtbogen brennt, öffnet der Schaltkontakt 17, so daß sowohl die Hochspannungsspitzen vom Zündgerät 14 als auch die Spannung von 100 V der Hilfs-Schweißstromquelle verschwinden. In diesem Augenblick wird die Trenndiode 21 leitend und der erforderliche Schweißstrom wird von dem Brückengleichrichter 2 geliefert.

Der Leistungstransistor 7 wird nicht mit der zum Zünden notwendigen Spannung von 100 V belastet. Dadurch, daß die Leerlaufspannung der Schweißstromquelle sehr niedrig ist, (34 V) bleibt auch die resultierende Wärmeverlustleistung sehr gering. Diese noch verbleibende Verlustleistung kann dann mit einem einfachen Lüfter abgeführt werden.

2 Patentansprüche

1 Figur

Bezugszeichenliste                    79 P 7207

1    Transformator
2    Brückengleichrichter
3    Leitung
4    Werkstück
5    Leitung
6    Widerstand
7    Leistungstransistor
8    Hilfsstromquelle
9    Drossel
10   Elektrode
11   Schutzgaszuführung
12   Leitungen
13   Leitungen
14   Zündgerät
15   Leitungen
16   Leitungen
17   Schaltkontakt
18   Transformator
19   Gleichrichter
20   Widerstand
21   Trenndiode

0029524

-1-    79 P 7207

Patentansprüche

1. Einrichtung zum Lichtbogenschweißen mit vorgegebener Stromcharakteristik, bestehend aus einer Schweißstromquelle mit einem Drehstromtransformator, einem nachgeschalteten Brückengleichrichter und einem Leistungstransistor als Stellglied für die Regelung auf die vorgegebene Schweißstromstärke, sowie einem zur Schweißstromquelle parallel geschalteten Zündgerät zum berührungslosen Zünden eines elektrischen Gleichstrom-Schweißlichtbogens, dadurch g e k e n n z e i c h n e t , daß eine Schweißstromquelle (1, 2) mit einer Leerlaufspannung von maximal 35 V verwendet ist, der über eine Trenndiode (20) eine Hilfs-Schweißstromquelle (18, 19) mit einer Leerlaufspannung von 80 bis 100 V, vorzugsweise 100 V, für die Dauer des Zündvorganges parallel schaltbar ist.

2. Einrichtung nach Anspruch 1, dadurch g e k e n n - z e i c h n e t , daß die Hilfs-Schweißstromquelle (18, 19) zeit- und/oder stromabhängig schaltbar ist.

1/1

R  1  2  5  6  7  21  9  11  10  12  14

S

T  3

$U_1$

8  20  4  13

19  18  15  16

17

0  R

Europäisches
Patentamt

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | GB - A - 1 142 206 (WELDING INSTITUTE) <br> * Seite 3, Zeile 103 bis Seite 4, Zeile 27; Figuren 1,2 * <br> & DE - A - 1 565 418 | 1 | B 23 K 9/06 |
| | FR - A - 2 221 223 (MITSUBISHI) <br> * Seite 2, Zeile 9 bis Seite 11, Zeile 19; Figuren 3-7 * | 1 | |
| | FR - A - 2 381 587 (ESAB) <br> * Seite 2, Zeile 35 bis Seite 4, Zeile 15; Figuren * | 1,2 | RECHERCHIERTE SACHGEBIETE (Int. Cl.³) <br><br> B 23 K 9/06 |
| D | DE - A - 1 964 245 (LINDE) <br> * Seite 5, Zeile 10 bis Seite 8, Zeile 6; Figur 1 * | 1 | |
| | FR - A - 2 376 546 (SOUD. AUTOG. FRANCAISE) <br> * Seite 2, Zeile 14 bis Seite 5, Zeile 25; Figuren 1,2 * | 1 | |
| X | US - A - 3 530 359 (GRIST) <br> * Spalte 2, Zeile 34 bis Spalte 5, Zeile 75; Figuren 1-3 * | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-03-1981 | DEMOLDER |

BAD ORIGINAL